# EUROPEAN PATENT SPECIFICATION

(11) **EP 3 003 596 B1**
(45) Date of publication and mention of the grant of the patent: **29.03.2017**
(21) Application number: 14734929.4
(22) Date of filing: 28.05.2014
(51) Int. Cl.: B21K 1/40, B29D 15/00, F16H 55/22, B21K 1/30, F16H 55/06

(54) **METHOD OF MANUFACTURING METAL CORE FOR RESIN GEAR**
VERFAHREN ZUR HERSTELLUNG EINES METALLKERNS FÜR EIN KUNSTHARZZAHNRAD
PROCÉDÉ DE FABRICATION D'UN NOYAU MÉTALLIQUE POUR ROUE DENTÉE EN RÉSINE

(30) Priority: 31.05.2013 JP 2013116423
(43) Date of publication of application: 13.04.2016
(73) Proprietor: Neturen Co., Ltd., Tokyo 141-8639 (JP); Mori Iron Works Co., Ltd., Kashima-shi, Saga 849-1302 (JP)
(72) Inventor: ISHIKI, Nobumoto, Tokyo 141-8639 (JP); SUZUKI, Ryosuke, Tokyo 141-8639 (JP); MORI, Takanobu, Kashima-shi Saga 849-1302 (JP); FUJIMURA, Hiroto, Kashima-shi Saga 849-1302 (JP); TANAKA, Toru, Saga-shi Saga 849-0932 (JP)
(74) Representative: Zimmermann & Partner Patentanwälte mbB
(86) International application number: PCT/JP2014/064794
(87) International publication number: WO 2014/192967

(56) References cited:
- JP-A- H11 301 501
- JP-A- 2001 141 033
- US-A1- 2010 294 064

## Description

### Technical Field

The present invention relates to a method of manufacturing a metal core for a resin gear, the metal core being used such that an outer peripheral resin is joined to an outer circumferential surface of a ring portion and a shaft is press-fitted into a boss portion.

### Background Art

Related art resin gears are configured such that an outer peripheral resin is joined to an outer circumferential surface of a metal core. For example, a worm wheel of a power steering apparatus may be configured as a resin gear in which an outer peripheral resin is joined to the outer circumferential surface of a metal core and is provided with gear teeth (see, e.g., JP2001-141033A and JP2011-106575A). By using a resin, weight of the worm wheel is reduced and a gear meshing sound is prevented.

The metal core has a boss portion into which a shaft is press-fitted, a ring portion to which an outer peripheral resin is joined, and a connecting portion connecting the boss portion and the ring portion. To the shaft, a steering force is transmitted from a steering wheel, and a reaction force is transmitted from the road surface. Therefore, sufficient joining strength is required between the boss portion and the shaft.

The metal core disclosed in JP2001-141033A is manufactured by forging a disk-shaped metal material to have a shape like a deep dish and by forming a shaft hole in the boss portion an outer circumferential concave-convex section on the ring portion. On the other hand, according to the example disclosed in JP2011-106575A, the metal core is manufactured by, among cutting, forging, sheet-metal pressing and the like, pressing a sheet metal to save cost.

According to the example disclosed in JP2001-141033A, because the metal core is manufactured by forging to have a shape like a deep dish, it is possible to reduce weight while ensuring strength by wall thickness. However, the metal core is large in the axial direction. If the boss portion and the ring portion are designed to be arranged in a radially overlapping manner to reduce the size in the axial direction, the pressing pressure needs to be significantly increased, because thick material is used to ensure sufficient strength. This consequently requires large facilities, and manufacturing is not easy.

According to the example disclosed in JP2011-106575A, the metal core is manufactured by a sheet-metal pressing. By using a thin plate, it is possible to easily arrange the boss portion and the ring portion in a radially overlapping manner so as to reduce the size and weight of the metal core. However, because the strength of metal core is lowered, the shaft cannot be press-fitted with a sufficient strength. It is possible to ensure strength by using a thicker plate. This, however, increases the weight of the metal core as well as the pressing pressure. Therefore, large facilities are required, and manufacturing is not easy.

US 2010/294064 A1 describes a core metal including a shaft through-hole allowing a shaft to be inserted thereinto, and a resin locking portion allowing a resin to be locked and fixed, the shaft through-hole having a thicker periphery formed on a periphery of a prepared hole allowing the shaft to be inserted thereinto so as to project on any one of or both a front surface and a back surface of the metal material. The prepared hole and the thicker periphery are molded by subjecting a flat metal material automatically transferred with use of a press machine to drawing, drilling, and thickening.

### Summary of Invention

It is an object of the present invention to provide a manufacturing method by which a metal core for a resin gear can be manufactured easily while ensuring strength and sufficiently reducing weight.

According to an aspect of the present invention, a method of manufacturing a metal core for a resin gear is provided. The metal core includes a boss portion into which a shaft is press-fitted, a ring portion having an outer circumferential surface provided with a concave-convex structure and to which an outer peripheral resin is joined, and a connecting portion via which the boss portion and the ring portion are coaxially provided. The method includes swaging a plate material having a center hole by pressing the plate material in an axial direction to form a swaged body, and forging the swaged body by pressing the swaged body in the axial direction under a higher pressure than the swaging to change the thickness of the swaged body. The swaging includes deforming a portion around the center hole of the plate material toward one side in the axial direction to form an inner circumferential swaged portion, and deforming an outer circumferential portion of the plate material toward the same side in the axial direction to form an outer circumferential swaged portion. The forging includes forming the inner circumferential swaged portion into the boss portion, and forming the outer circumferential swaged portion into the ring portion. The forging may include making at least one of the ring portion and the connecting portion thinner than the boss portion.

The swaging may include pressing the plate material in a plurality of stages by using a plurality of swaging dies having different radii of curvature of die surfaces in descending order of the radii of curvature.

The forging may include, after forming the swaged body having the inner circumferential swaged portion and the outer circumferential swaged portion in the swaging, pressing each of the inner circumferential swaged portion, the outer circumferential swaged portion, and a portion between the inner circumferential swaged portion and the outer circumferential swaged portion to adjust the thicknesses of the boss portion, the ring portion, and the connecting portion.

According to the above aspect of the present invention, the metal core for a resin gear is manufactured by the swaging in which the swaged body is formed by pressing the plate material in the axial direction and the forging in which the thickness of the swaged body is changed by pressing the swaged body in the axial direction. Therefore, it is not required to remove a large amount of material as in machining such as cutting. In addition, high-pressure pressing is not required, because the thickness of the plate to be pressed is significantly smaller than the size of the metal core in the axial direction.

Further, during the swaging, the swaged body is formed by pressing the plate having the center hole. Therefore, it is possible to easily form the inner circumferential swaged portion and the boss portion. In addition, during the forging, the thickness of each portion is adjusted by pressing the swaged body having a similar shape as the metal core. Therefore, it is possible to easily provide desired thickness. Accordingly, manufacturing is easy.

When the metal core is manufactured in this manner, it is possible to adjust each of the boss portion, the connecting portion and the ring portion to have a suitable thickness, thereby ensuring strength of each portion. Furthermore, since the materials of the boss portion, the connecting portion and the ring portion are continuous with each other, the strength between the boss portion and the connecting portion and the strength between the connecting portion and the ring portion can be ensured. This consequently makes it possible to sufficiently reduce the thickness. Therefore, it is possible to provide the manufacturing method by which the metal core can be manufactured while ensuring the strength and sufficiently reducing the weight.

### Brief Description of Drawings

Fig. 1 is a cross-sectional view illustrating a metal core manufactured by a method according to first and second embodiments of the invention.
Fig. 2 is a front view illustrating the metal core manufactured by the method according to the first and second embodiments of the invention.
Figs. 3A to 3F are schematic cross-sectional views illustrating respective steps in the manufacturing method according to the first embodiment of the invention.
Figs. 4A to 4E are schematic cross-sectional views illustrating respective steps in the manufacturing method according to the second embodiment of the invention.

### Description of Embodiments

Hereinafter, embodiments of the present invention will be described in detail with reference to the accompanying drawings. Each embodiment will be described in relation to an example of manufacturing a metal core for a resin gear which is used in a worm wheel of a power steering apparatus.

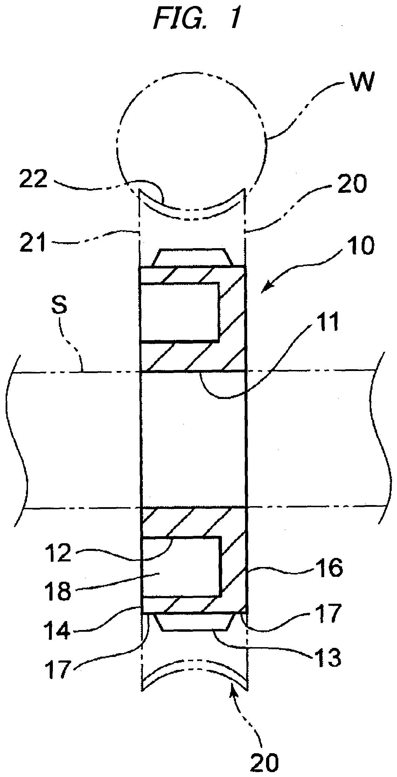

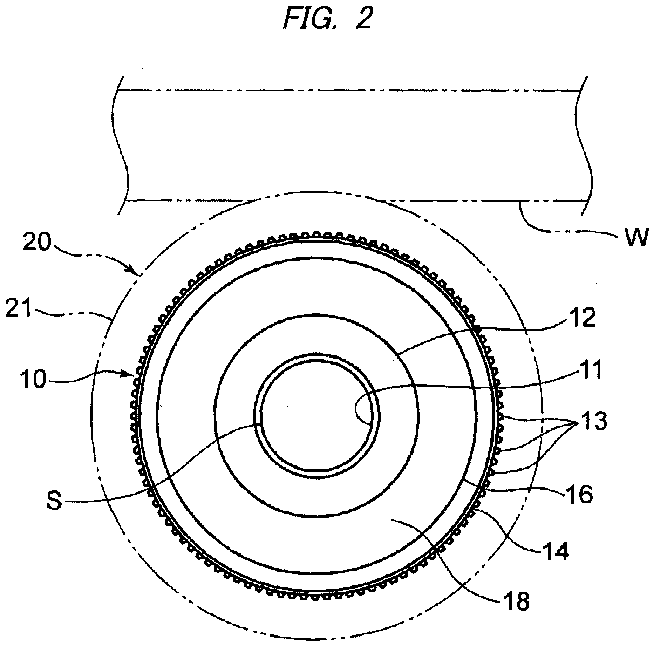

As shown in Fig. 1 and Fig. 2, a metal core 10 manufactured according to a first embodiment of the present invention is entirely made of a metal material, and includes a boss portion 12 and a ring portion 14 which are coaxially provided by means of a connecting portion 16. An outer circumferential surface of the ring portion 14 is formed with a concave-convex structure 13 at intervals in the circumferential direction. The concave-convex structure 13 is formed on the outer circumferential surface of the ring portion 14 by a plurality of ridges or grooves, and smooth sections 17 without concavities or convexities are provided on the respective axial sides of the concave-convex structure 13 continuously along the entire circumference.

In the metal core 10, the boss portion 12 and the ring portion 14 are formed integrally and continuously at the same side in the axial direction, thereby forming the connecting portion 16. A hollow section 18 which is opened in one direction is formed between the boss portion 12 and the ring portion 14. The portion connecting the ring portion 14 and the connecting portion 16 and the portion connecting the connecting portion 16 and the boss portion are configured to have a curved profile with a small radius of curvature.

In the metal core 10, the thickness of each portion is formed as thin as possible while attaining a strength that is required in use for a resin gear. In particular, at least one of the ring portion 14 and the connecting portion 16 is formed thinner than the boss portion 12. In this embodiment, both of the ring portion 14 and the connecting portion 16 are formed thinner than the boss portion 12. Although not specifically limited, the maximum diameter of the ring portion 14, for example, is in a range of 2 to 5 times the outer diameter of the boss portion 12. It is preferred that the maximum diameter of the ring portion 14 be in a range of 10 to 20 times the thickness of the boss portion 12.

An outer peripheral resin 21 having a circular ring shape is welded to the outer circumferential surface of the ring portion 14, thereby forming a composite member 20, and gear teeth 22 are provided on the outer circumferential surface of the outer peripheral resin 21, thereby forming a worm wheel, so that the metal core 10 can be used for a resin gear. In addition, a shaft S to which a steering force from a steering wheel or a reaction force from the road surface to a tire is transmitted is press-fitted into the boss portion 12, and a worm W which is rotated by a driving unit such as a motor is screwed to the gear teeth 22.

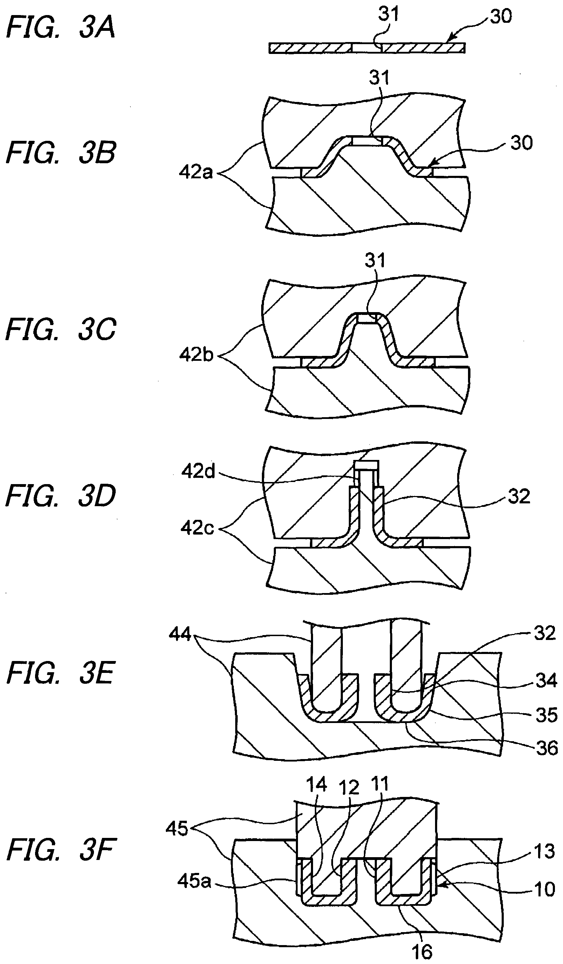

According to this embodiment, this metal core 10 is manufactured using a transfer press. As shown in Fig. 3A, a disk-shaped plate 30 having a center hole 31 in the axial direction is prepared. The plate 30 can be made of, for example, a metal, such as hot-rolled mild steel (SPHC), although the material for the plate 30 is not specifically limited. The plate 30 can be implemented as a metal plate, the both surfaces of which has undergone phosphate coating or the like. In the plate 30 that is used, the diameter of the center hole 31 is smaller than the diameter of a through-hole 11 in the inner circumference of the boss portion 12. When the diameter of the center hole 31 is equal to or greater than the diameter of a through-hole 11, it is not easy to shape the boss portion 12 only by pressing in one direction.

Sequentially, a swaging process is carried out. This process uses a plurality of swaging dies having different radii of curvature of die surfaces in descending order of the radii of curvature, and the plate 30 is pressed in a plurality of stages. Specifically, as shown in Fig. 3B, the plate 30 is pressed in the axial direction using an inner circumference swaging die 42a having the greatest radius of curvature of the radially inner circumferential side such that the radially inner circumferential side is curved at one side. Sequentially, as shown in Fig. 3C, the plate 30 is pressed in the axial direction using an inner circumference swaging die 42b having the second greatest radius of curvature of the radially inner circumferential side to that of the first inner circumference swaging die 42a such that the radius of curvature of the radially inner circumferential side is reduced.

As shown in Fig. 3D, the plate 30 is pressed in the axial direction using an inner circumference swaging die 42c having a column-shaped section 42d such that the portion around the center hole 31 of the plate 30 is raised in the axial direction, thereby forming an inner circumferential swaged portion 32.

Sequentially, as shown in Fig. 3E, the outer circumferential side of the plate 30 is pressed in the axial direction using an outer circumference swaging die 44 that has a barrel-shaped male die part and a recessed female die part. The outer circumferential portion is deformed and raised in the same direction as the inner circumferential swaged portion 32, thereby forming an outer circumferential swaged portion 34. Here, as in the inner circumferential swaged portion 32, the pressing may be divided into a plurality of steps using a plurality of outer circumference swaging dies having different radii of curvature of the outer circumferential side. Consequently, a swaged body 35 is formed.

Sequentially, a forging process is carried out. The swaged body 35 is pressed in the axial direction under a pressure higher than the pressure in the swaging process using a forging die 45 consisting of a female die part and a male die part which defines a shaping space corresponding to the metal core 10. This consequently changes the thickness and shape of the swaged body 35, thereby adjusting the thickness and shape of each portion. Specifically, as shown in Fig. 3F, the inner circumferential swaged portion 32 has a shape and thickness that defines the boss portion 12, the outer circumferential swaged portion 34 has a shape and thickness that defines the ring portion 14, and an intermediate portion 36 between the inner swaged portion 32 and the outer swaged portion 34 has a shape and thickness that defines the connecting portion 16. According to this embodiment, the thickness of the boss portion 12 is greater than the thickness of the ring portion 14 and the thickness of the connecting portion 16. The thickness of the boss portion 12 can be equal to or greater than the thickness of the plate 30 that has been used, whereas the thickness of the boss portion 12 may be smaller than the thickness of the plate 30. For this, dies which are used in the forging process may be suitably selected.

In this forging process, the concave-convex structure 13 is formed on the outer circumferential surface of the ring portion 14 after the shape and thickness of each portion is adjusted or concurrently with this adjustment. According to this embodiment, the forging die 45 has a concave-convex forming die surface 45 to form the concave-convex structure 13 simultaneously with the adjustment of the thickness of the ring portion. Subsequently, finishing is carried out as required. The respective portions are finished by, for example, forming the smooth sections 17 by cutting both axial edges of the outer circumference of the ring portion 14 or removing the end of the ring portion 14, thereby completing the metal core 10.

In the metal core 10 produced in this manner, the outer circumference thereof is coated with an adhesive. Then, for example, the cylindrical outer peripheral resin 21 is fitted into the ring portion 14 of the metal core 10, and vertices of the concave-convex structure 13 are brought into contact with the inner circumference of the outer peripheral resin 21. In this state, the metal core 10 is induction heated. This consequently melts the inner circumference of the outer peripheral resin 21 so that the concave-convex structure 13 is welded to the outer circumferential surface of the ring portion 14 while the concave-convex structure 13 is completely buried in the outer peripheral resin 21, thereby manufacturing the resin core composite member 20. The composite member 20 can be provided for use as a worm wheel by forming intended gear teeth 22 on the outer circumferential surface of the outer peripheral resin 21 and press-fitting the shaft into the boss portion 12.

By manufacturing the metal core 10 as described above, it is possible to manufacture the metal core 10 using the swaging process of shaping the swaged body 35 by pressing the plate 30 in the axial direction and the forging process of changing the thickness and shape of the swaged body 35 by pressing the swaged body 35 in the axial direction. Therefore, it is not required to remove a large amount of material as in machining such as cutting. In addition, high-pressure pressing is not required since the plate 30, the thickness of which is significantly smaller than the axial thickness of the metal core 10, is pressed.

Furthermore, since the swaging process shapes the swaged body 35 by pressing the plate 30 having the center hole, it is possible to easily form the inner circumferential swaged portion 32 and the boss portion 12. In addition, since the forging process changes and adjusts the thickness and shape of each portion by pressing the swaged body 35, the shape of which is similar to that of the metal core 10, it is easy to form each portion.

In addition, when the metal core 10 is manufactured in this manner, it is possible to ensure that each portion have strength since each of the boss portion 12, the connecting portion 16 and the ring portion 14 can be adjusted to a suitable thickness. Furthermore, since the materials of the boss portion 12, the connecting portion 16 and the ring portion 14 continue from each other, the strength between the boss portion 12 and the connecting portion 16 and the strength between the connecting portion 16 and the ring portion 14 can be assured. This consequently makes it possible to sufficiently reduce the thickness.

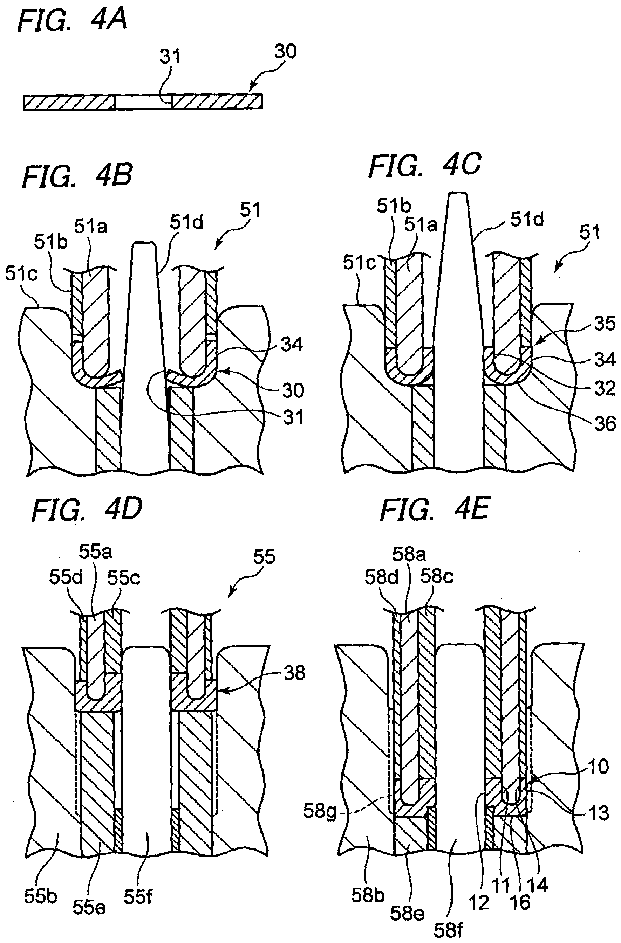

According to a second embodiment of the present invention, a metal core for a resin gear is manufactured using a multi-axis press. As shown in Fig. 4A, a plate 30 that is the same shape as that of the first embodiment is prepared. This plate 30 has a center hole 31 and may be made of a metal such as SPHC or the like, front and back surfaces of which may undergo phosphate coating or the like.

Sequentially, the swaging process is carried out. Here, the plate 30 is pressed using a swaging die 51. Specifically, as shown in Fig. 4B, the plate 30 is arranged at a specified position of the swaging die 51 using the center hole 31 or the outer circumferential edge of the plate. Then, an outer circumferential swaged portion 34 is formed by pressing the plate by axially relatively moving upper barrel-type male swaging die 51a and 51b which press the inner circumferential side rather than the outer circumferential edge of the plate 30 and a lower female swaging die 51c which presses the outer circumferential side of the plate 30. Further, as shown in Fig. 4C, an inner circumferential swaged portion 32 is formed by pressing the swaged body by axially relatively moving a lower male swaging die 51d which presses the inner circumferential side of the plate 30 and the upper barrel-type male swaging die 51b which presses the outer circumferential side rather than the inner circumferential edge of the plate while holding the plate in the barrel-type upper male swaging die 51a. These pressing steps may be carried out sequentially or simultaneously. When these pressing steps are carried out simultaneously, it is preferred that the inner and outer circumferential sides of the plate 30 be pressed by the lower female and male swaging dies 51c, 51d, and the plate is pressed by the upper barrel-type male swaging dies 51a, 51b while a diagonally intermediate section of the plate 30 is held in and pressed by the upper barrel-type male swaging die 51a, thereby forming a swaged body 35.

Sequentially, the forging process is carried out. Here, an intermediate portion 36 between the inner circumferential swaged portion and the outer circumferential swaged portion 32 and 34, the inner swaged portion 32, and the outer swaged portion 34 are respectively pressed in the axial direction by the forging die 55. This consequently changes the thickness and shape of the swaged body 35, thereby shaping the swaged body by adjusting the specified thickness and shape of the connecting portion 16, the boss portion 12, and the ring portion 14. Specifically, as shown in Fig. 4D, the forging process is performed using an annular upper forging die 55a, 55c, 55d, and a lower forging die 55b, 55e, 55f. The upper forging die includes an upper inner forging part 55c which presses the upper surface of the inner swaged portion 32, an upper outer forging part 55d which presses the upper surface of the outer swaged portion 34, and an upper intermediate forging part 55a which presses the upper surface of the intermediate portion 36 between the inner swaged portion 32 and the outer swaged portion 34. The outer, inner, and intermediate forging parts are provided concentrically. The lower forging die includes a lower male forging part 55f which is inserted into the inner circumferential surface of the inner swaged portion 32, a lower outer forging part 55b which is brought into contact with the outer circumferential surface of the outer swaged portion 34, and a lower intermediate forging part 55e which presses the lower surface of the intermediate portion 36. The lower inner, outer, and intermediate forging parts are provided concentrically.

The swaged body 35 is placed on the lower forging die 55b, 55e, 55f, and is pressed in the axial direction under a pressure higher than that in the swaging process by relatively moving each portion of the upper forging die 55a, 55c, 55d and each portion of the lower forging die 55b, 55e, 55f in the axial direction. This consequently changes the thickness and shape of each portion of the swaged body, thereby forming the connecting portion 16, the boss portion 12, and the ring portion 14 that are intended by adjusting the thickness and shape of each portion.

According to this embodiment, the distance between the inner side of the lower outer forging part 55b and the outer side of the upper intermediate forging part 55a forms a gap that is similar or equal to a maximum thickness of the ring portion that is intended, and the distance between the outer side of the lower male forging part 55f and the inner side of the upper intermediate forging part 55a forms a gap that is similar or equal to a thickness of the boss portion 12 that is intended. Further, the lower intermediate forging part 55e and the upper inner forging part 55a can be pressed until the distance between the upper surface of the lower intermediate forging part 55e and the lower surface of the upper inner forging part 55c becomes similar or equal to the axial length of the boss portion 12 that is intended. Further, the lower intermediate forging part 55e and the upper outer forging part 55d can be pressed until the distance between the upper surface of the lower intermediate forging part 55e and the lower surface of the upper outer forging part 55d becomes similar or equal to the axial length of the ring portion 14 that is intended. Furthermore, the lower intermediate forging part 55e and the upper intermediate forging part 55a can be pressed until the distance between the upper surface of the lower intermediate forging part 55e and the lower surface of the upper intermediate forging part 55a becomes equal to the thickness of the connecting portion 16 that is intended. Consequently, the forged body 38 is provided.

Sequentially, a serration process is carried out in order to form concave-convex structure 13 on the outer circumferential surface of the forged body 38. According to this embodiment, as shown in Fig. 4E, a concave-convex forming die surface 58g is provided at a lower portion of an inner circumferential surface of an outer die part 58b. In the outer die part 58b, the ring portion 14 of the forged body 38 is pressed and supported by a lower die part 58e and upper die parts 58a, 58c, 58d from both axial sides of the die parts. While maintaining this state, the concave-convex structure 13 is formed by axially moving the ring portion 14 from the upper portion of the outer die part 58b towards the concave-convex forming die surface 58g. The shape of the upper portion and the lower die surface 58g of the outer die part 58b is substantially the same as that of the lower forging parts 55b, 55e, and the shape of the upper die parts 58a, 58c, 58d is substantially the same as that of the upper forging parts 55a, 55c, 55d. Therefore, it is possible to continuously perform the serration process after the forging process using the same dies.

Sequentially, finishing is carried out as required, thereby completing the manufacturing of the metal core 10. In the metal core 10 manufactured in this manner, a resin core composite member 20 can be manufactured by performing the same processes as in the first embodiment. The composite member 20 may be provided for use as a worm wheel by forming intended gear teeth 22 on the composite member 20 and press-fitting the shaft into the boss portion 12.

In the second embodiment as set forth above , it is also possible to easily manufacture the metal core 10 which ensures strength and reduce the weight as in the first embodiment. That is, according to this embodiment, the metal core 10 is manufactured after the plate 30 is shaped into the swaged body 35 and then forged. Therefore, it is not required to remove a large amount of as in machining such as cutting or to forge a thick material under a high pressure. In addition, in the swaging process, it is possible to easily form the inner swaged portion 32 or the boss portion 12, and in the forging process, it is possible to easily form each portion into the intended thickness and shape. Furthermore, since the boss portion 12, the connecting portion 16 and the ring portion 14 can be respectively adjusted to suitable thicknesses and continue from each other, it is possible to make the metal core 10 sufficiently thinner while securing the strength.

The above-mentioned embodiments can be suitably modified within the scope of the present invention. For example, although the embodiments have illustrated that the resin gear is provided as the worm wheel of a power steering apparatus, the present invention can be applied to other gears. In addition, although an example of manufacturing the metal core 10 in which the boss portion 12 and the ring portion 14 are arranged on the same side with respect to the connecting portion 16 has been illustrated, the present invention can adopt other case in which the boss portion 12 and the ring portion 14 are arranged on opposite sides with respect to the connecting portion 16.

It is also possible to repeatedly perform the swaging process and the forging process without performing the forging process after the swaging process. Repeating the swaging process and the forging process can prevent the plate from being locally thinned by a sudden deformation.

According to the above-mentioned embodiments, each parts of the upper and lower forging dies may be configured such that they are arranged around the lower male forging part having a circular section while being combined inside and outside into a barrel shape in the diameter direction, and some of the die parts are formed integrally without controlling the respective parts. In addition, a substantially barrel-shaped auxiliary die part may be arranged around the lower male forging part.

In the forgoing, the annular outer peripheral resin 21 is fitted on the outer circumferential surface of the ring portion 14 of the metal core 10 and is welded to the ring portion 14 by induction heating the metal core 10. However, the present invention is not particularly limited thereto, and the outer peripheral resin 21 may be joined to the outer circumferential surface of the ring portion 14 by means of other methods. For example, the outer peripheral resin 21 may be formed by injection molding a molten resin onto the outer circumferential surface of the metal core 10. Furthermore, although, in the forging process, the thicknesses and shapes of the entire of the boss portion 12, the ring portion 14, and the connecting portion 16 are changed when adjusting the shape and thickness of each portion of the swaged body 35, if some of the thicknesses or shapes are intended shapes or thicknesses, only the thicknesses or shapes other than the intended thickness or shape can be adjusted.

## Claims

1. A method of manufacturing a metal core (10) for a resin gear, the metal core (10) comprising a boss portion (12) into which a shaft (S) is to be press-fitted, a ring portion (14) having an outer circumferential surface provided with a concave-convex structure (13) and to which an outer peripheral resin (21) is to be joined, and a connecting portion (16) via which the boss portion (12) and the ring portion (14) are coaxially provided, the method comprising:
swaging a plate material (30) having a center hole (31) by pressing the plate material (30) in an axial direction to form a swaged body (35); and
forging the swaged body (35) by pressing the swaged body (35) in the axial direction under a higher pressure than the swaging to change the thickness of the swaged body (35),
wherein the swaging comprises deforming a portion around the center hole (31) of the plate material (30) toward one side in the axial direction to form an inner circumferential swaged portion (32), and deforming an outer circumferential portion of the plate material (30) toward the same side in the axial direction to form an outer circumferential swaged portion (34), and
wherein the forging comprises forming the inner circumferential swaged portion (32) into the boss portion (12), and forming the outer circumferential swaged portion (34) into the ring portion (14).

2. The method according to claim 1, wherein the forging comprises making at least one of the ring portion (14) and the connecting portion (16) thinner than the boss portion (12).

3. The method according to claim 1 or 2, wherein the swaging comprises pressing the plate material (30) in a plurality of stages by using a plurality of swaging dies (42a, 42b) having different radii of curvature of die surfaces in descending order of the radii of curvature.

4. The method according to any one of claims 1 to 3, wherein the forging comprises, after forming the swaged body (35) having the inner circumferential swaged portion (32) and the outer circumferential swaged portion (34) in the swaging, pressing each of the inner circumferential swaged portion (32), the outer circumferential swaged portion (34), and a portion (36) between the inner circumferential swaged portion (32) and the outer circumferential swaged portion (34) to adjust the thicknesses of the boss portion (12), the ring portion (14), and the connecting portion (16.

5. The method according to any one of claims 1 to 4, wherein the forging comprises, after pressing the outer circumferential swaged portion (34), further pressing the outer circumferential swaged portion (34) in the axial direction from both sides, and at the same time, relatively moving the outer circumferential swaged portion (34) and a concave-convex forming die surface (45a, 58g) in the axial direction to form the concave-convex structure (13).

## Patentansprüche

1. Ein Verfahren zum Herstellen eines Metallkerns (10) für ein Harzgetriebe, der Metallkern (10) umfasst einen Lagerabschnitt (12), in den ein Schaft (S) pressgepasst werden soll, einen Ringabschnitt (14) mit einer äußeren Umfangsfläche, die mit einer konkav-konvexen Struktur (13) vorgesehen ist und mit der ein äußerer peripherer Harz (21) verbunden werden soll, und einen Verbindungsabschnitt (16), über den der Lagerabschnitt (12) und der Ringabschnitt (14) koaxial bereitgestellt sind, das Verfahren umfasst:
Verpressen eines Plattenmaterials (30) mit einem Mittelloch (31) durch Pressen des Plattmaterials (30) in einer axialen Richtung, um einen gepressten Körper (35) zu formen; und
Schmieden des gepressten Körpers (35) durch Pressen des gepressten Körpers (35) in der axialen Richtung unter einem höheren Druck als beim Verpressen, um die Dicke des gepressten Körpers (35) zu ändern,
wobei das Verpressen Verformen eines Abschnitts um das Mittelloch (31) des Plattenmaterials (30) herum in Richtung einer Seite in der axialen Richtung, um einen inneren verpressten Umfangsabschnitt (32) auszubilden, und Verformen eines äußeren Umfangsabschnitts des Plattmaterials (30) in Richtung derselben Seite in der axialen Richtung, um einen äußeren verpressten Umfangsabschnitt (34) auszubilden, umfasst, und
wobei das Schmieden Formen des inneren verpressten Umfangsabschnitts (32) in den Lagerabschnitt (12) und Formen des äußeren verpressten Umfangsabschnitts (34) in den Ringsabschnitt (14) umfasst.

2. Das Verfahren nach Anspruch 1, wobei das Verpressen Ausbilden von mindestens einem von dem Ringsabschnitt (14) und dem Verbindungsabschnitt (16) dünner als den Lagerabschnitt (12) umfasst.

3. Das Verfahren nach Anspruch 1 oder 2, wobei das Schmieden Pressen des Plattenmaterials (30) in einer Mehrzahl von Stufen unter Verwendung von einer Mehrzahl von Schmidformen (42a, 42b), die unterschiedliche Krümmungsradien der Formflächen aufweisen, in absteigender Reihenfolge der Krümmungsradien umfasst.

4. Das Verfahren nach einem der Ansprüche 1 bis 3, wobei das Schmieden nach Ausbilden des gepressten Körpers (35) mit dem inneren verpressten Umfangsabschnitt (32) und dem äußeren verpressten Umfangsabschnitt (34) beim Verpressen, Pressen von jeden von dem inneren verpressten Umfangsabschnitt (32), dem äußeren verpressten Umfangsabschnitt (34) und einem Abschnitt (36) zwischen dem inneren verpressten Umfangsabschnitt (32) und dem äußeren verpressten Umfangsabschnitt (34) umfasst, um die Dicke des Lagerabschnitts (12), des Ringsabschnitts (14) und des Verbindungsabschnitts (16) anzupassen.

5. Das Verfahren nach einem der Ansprüche 1 bis 4, wobei das Schmieden, nach dem Pressen des äußeren gepressten Umfangsabschnitts (34), weiteres Pressen des äußeren gepressten Umfangsabschnitts (34) in der axialen Richtung von beiden Seiten, und gleichzeitig Relativbewegen des äußeren gepressten Umfangsabschnitts (34) und einer konkav-konvexen Ausbildungformfläche (45a, 58g) in der axialen Richtung umfasst, um die konkav-konvexe Struktur (13) auszubilden.

## Revendications

1. Procédé de fabrication d'un noyau de métal (10) pour un embrayage en résine, le noyau de métal (10) comprenant une portion de bossage (12) dans laquelle un arbre (S) doit être emmanché à force, une portion de bague (14) ayant une surface circonférentielle externe pourvue d'une structure concave-convexe (13) et à laquelle une résine périphérique externe (21) doit être jointe, et une portion de raccordement (16) par l'intermédiaire de laquelle la portion de bossage (12) et la portion de bague (14) sont fournies coaxialement, le procédé comprenant :
le sertissage d'un matériau de tôle (30) ayant un trou central (31) par pressage du matériau de tôle (30) dans une direction axiale pour former un corps serti (35) ; et
le forgeage du corps serti (35) par pressage du corps serti (35) dans la direction axiale sous une pression plus élevée que le sertissage pour changer l'épaisseur du corps serti (35),
dans lequel le sertissage comprend la déformation d'une portion autour du trou central (31) du matériau de tôle (30) vers un côté dans la direction axiale pour former une portion sertie circonférentielle interne (32), et la déformation d'une portion circonférentielle externe du matériau de tôle (30) vers le même côté dans la direction axiale pour former une portion sertie circonférentielle externe (34), et
dans lequel le forgeage comprend la formation de la portion sertie circonférentielle interne (32) dans la portion de bossage (12), et la formation de la portion sertie circonférentielle externe (34) dans la portion de bague (14).

2. Procédé selon la revendication 1, dans lequel le forgeage comprend le fait de rendre au moins l'une de la portion de bague (14) et de la portion de raccordement (16) plus fine que la portion de bossage (12).

3. Procédé selon la revendication 1 ou 2, dans lequel le sertissage comprend le pressage du matériau de tôle (30) dans une pluralité d'étages par l'utilisation d'une pluralité de matrices de sertissage (42a, 42b) ayant différents rayons de courbure de surfaces de matrice par ordre décroissant des rayons de courbure.

4. Procédé selon l'une quelconque des revendications 1 à 3, dans lequel le forgeage comprend, après formation du corps serti (35) ayant la portion sertie circonférentielle interne (32) et la portion sertie circonférentielle externe (34) dans le sertissage, le pressage de chacune de la portion sertie circonférentielle interne (32), de la portion sertie circonférentielle externe (34), et d'une portion (36) entre la portion sertie circonférentielle interne (32) et la portion sertie circonférentielle externe (34) pour ajuster les épaisseurs de la portion de bossage (12), de la portion de bague (14) et de la portion de raccordement (16).

5. Procédé selon l'une quelconque des revendications 1 à 4, dans lequel le forgeage comprend, après pressage de la portion sertie circonférentielle externe (34), le pressage plus avant de la portion sertie circonférentielle externe (34) dans la direction axiale depuis les deux côtés, et en même temps, le déplacement relatif de la portion sertie circonférentielle externe (34) et d'une surface de matrice de formation concave-convexe (45a, 58g) dans la direction axiale pour former la structure concave-convexe (13).
